# EUROPÄISCHE PATENTSCHRIFT

(11) **EP 1 248 198 B1**
(45) Veröffentlichungstag und Bekanntmachung des Hinweises auf die Patenterteilung: **02.11.2016**
(21) Anmeldenummer: 02006840.9
(22) Anmeldetag: 26.03.2002
(51) Int. Cl.: G06F 11/26, G06F 11/36

(54) **Programmgesteuerte Einheit mit Emulations-Einheiten**
Program-controlled unit with emulation units
Unité à commande par programme avec unités d'émulation

(30) Priorität: 04.04.2001 DE 10116861
(43) Veröffentlichungstag der Anmeldung: 09.10.2002
(73) Patentinhaber: Infineon Technologies AG, 85579 Neubiberg (DE)
(72) Erfinder: Barrenscheen, Jens, 81669 München (DE); Fenzel, Gunther, 85635 Höhenkirchen (DE)
(74) Vertreter: Repkow, Ines

(56) Entgegenhaltungen:
- US-A- 5 132 971
- US-A- 5 640 542
- PATENT ABSTRACTS OF JAPAN vol. 2000, no. 15, 6. April 2001 (2001-04-06) & JP 2000 347942 A (TOSHIBA CORP), 15. Dezember 2000 (2000-12-15)

## Beschreibung

Die vorliegende Erfindung betrifft eine Vorrichtung gemäß dem Oberbegriff des Patentanspruchs 1, d.h. eine programmgesteuerte Einheit.

Programmgesteuerte Einheiten wie Mikroprozessoren, Mikrocontroller, Signalprozessoren etc. sind seit vielen Jahren in unzähligen Ausführungsformen bekannt und bedürfen keiner näheren Erläuterung.

Ein bekanntes Problem von programmgesteuerten Einheiten besteht darin, daß es häufig nicht einfach ist, auftretende Fehler zu erkennen, zu lokalisieren, und zu beheben.

Häufig bedient man sich hierzu eines sogenannten Emulators. Ein Emulator ist in der Lage, das Auftreten vorgebbarer Zustände oder Ereignisse zu erkennen und auf eine ebenfalls vorgebbare Art und Weise auf das Auftreten des betreffenden Zustandes oder Ereignisses zu reagieren.

Die vorgebbaren Zustände oder Ereignisse bestehen beispielsweise darin, daß innerhalb oder außerhalb der programmgesteuerten Einheit bestimmte Daten, Adressen oder Steuersignale transferiert werden oder gespeichert sind.

Die vorgebbaren Reaktionen auf das Auftreten solcher oder anderer Zustände oder Ereignisse umfassen beispielsweise das Anhalten der programmgesteuerten Einheit, das Auslesen und/oder das Verändern der Inhalte von Registern oder internen oder externen Speichern, und/oder die Aufzeichnung und Auswertung der zuvor und/oder danach auftretenden Verläufe von interessierenden Daten, Adressen, Signalen, und/oder Register- und Speicherinhalten.

Bekanntlich können in Massenprodukten eingesetzte programmgesteuerte Einheiten, welche im folgenden der Einfachheit halber als Massenproduktions-Versionen der programmgesteuerten Einheit bezeichnet werden, nicht emuliert werden, weil bei diesen nur teilweise eine Zugriffsmöglichkeit auf die interessierenden Daten, Adressen, Signale, Register und Speicher besteht, und weil diese nicht über die Möglichkeit verfügen das Auftreten der interessierenden Zustände und Ereignisse in Echtzeit zu überwachen.

Deshalb werden insbesondere von komplexeren programmgesteuerten Einheiten spezielle Versionen hergestellt, die hierzu in der Lage sind. Diese speziellen Versionen der programmgesteuerten Einheiten werden im folgenden als Emulations-Versionen der programmgesteuerten Einheit bezeichnet.

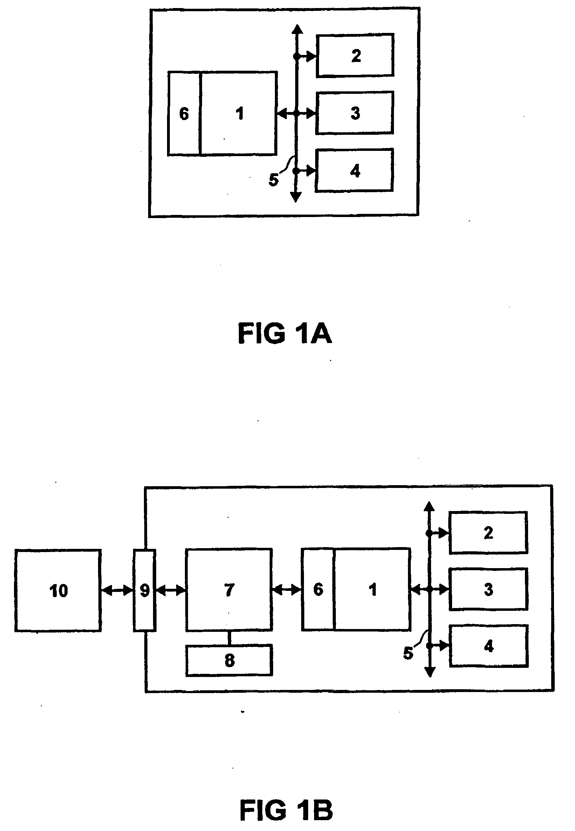

Die Figur 1A zeigt den prinzipiellen Aufbau der Massenproduktions-Version einer programmgesteuerten Einheit, und Figur 1B den Aufbau der Emulations-Version der programmgesteuerten Einheit.

Die in der Figur 1A gezeigte Massenproduktions-Version enthält einen Core 1, Peripherie-Einheiten 2, 3, und 4 wie beispielsweise Timer, A/D-Wandler, Speicher etc., sowie einen den Core 1 und die Peripherie-Einheiten 2, 3, und 4 verbindenden Bus 5. Der Core 1 enthält darüber hinaus ein Emulations-Interface 6, über welches eine in der Emulations-Version der programmgesteuerten Einheit (siehe Figur 1B) vorgesehene Emulations-Einheit mit dem Core 1 verbindbar ist.

Die in der Figur 1B gezeigte Emulations-Version enthält die Massenproduktions-Version, also ebenfalls den Core 1, die Peripherie-Einheiten 2, 3, und 4, den Bus 5, und das Emulations-Interface 6, und zusätzlich für die Emulation benötigte Komponenten, wobei diese Komponenten eine Emulations-Einheit 7, Debug-Ressourcen 8, und eine Steuerungs-Schnittstelle 9 umfassen, über welche die Emulations-Einheit 7 mit einer außerhalb der programmgesteuerten Einheit vorgesehenen, die Emulation steuernden Steuereinheit 10 verbindbar ist.

Der Vollständigkeit halber sei angemerkt, daß die Emulations-Version der programmgesteuerten Einheit aus einem oder mehreren Halbleiter-Chips bestehen kann. Insbesondere können (müssen aber nicht) die die zur Emulation benötigten Komponenten auf einem eigenen Halbleiter-Chip untergebracht sein, welcher mit dem die Massenproduktions-Version der programmgesteuerten Einheit enthaltenden Chip verbunden ist; eine solche programmgesteuerte Einheit ist in der DE 197 432 64 A1 beschirieben.

Ferner, beschreibt das Dokument US-A-5 640 542 einen Mikroprozessor, der zwei Emulator-Module (ICE) beinhaltet. Die zwei Module werden parallel verwendet und es gibt keine Auswahlvorrichtung, durch die entscheiden werden kann, welches Modul verwendet werden soll.

Das Dokument US-B-6 553 506 beschreibt einen Mikroprozessor mit integrierter, mini Debug-Funktionalität, der noch mit einem externen vollständigen Debugger kommunizieren kann. Der Mini-Debugger kann einfache Debug-Befehle ausführen die immer vom externen Debugger kommen. Entsprechend gibt es keine Auswahlvorrichtung, die zwischen den ersten (mini) Debugger und den zweiten (vollständigen) Debugger umschalten kann.

Die Emulations-Einheit 7 enthält beispielsweise eine sogenannte Breakpoint- oder Watchpoint-Logik, welche erforderlich ist, um die Zustande oder Ereignisse, deren Auftreten überwacht werden soll, einzustellen, und um das Auftreten der zu überwachenden Zustände oder Ereignisse zu erkennen.

Die Debug-Ressourcen enthalten beispielsweise
- einen sogenannten Overlay-Speicher, in welchen Programme und/oder Daten gespeichert werden können, die während der Emulation anstelle der Programme und/oder Daten verwendet werden können, die in den normalerweise benutzten Speichern gespeichert sind, und
- einen sogenannten Monitor Speicher, in welchem Debug-Sequenzen gespeichert sind, die zur Durchführung von bestimmten, für die Emulation erforderlichen Aktionen vom Core ausgeführt werden müssen.

Durch die zusätzlichen Komponenten, die die Emulations-Version enthält, ist die Emulations-Version der programmgesteuerten Einheit teurer als die Massenproduktions-Version und wird aus diesem Grund im allgemeinen nur in der Entwicklungsphase verwendet; in fertig entwickelten und verkauften Geräten werden normalerweise die billigeren Massenproduktions-Versionen der programmgesteuerten Einheit eingesetzt.

Nun ist es aber nicht ausgeschlossen, daß auch in fertig entwickelten Geräten Fehler auftreten können, die nur durch eine Emulation lokalisiert und behoben werden können. Eine Emulation der Massenproduktions-Version ist jedoch nicht möglich, weil dieser die hierfür erforderlichen Komponenten (Emulations-Einheit 7, Debug-Ressourcen 8, und Schnittstelle 9) fehlen.

Folglich ist es mitunter nicht oder nur mit einem immensen Aufwand möglich, unerwartet auftretende Fehler zu lokalisieren und zu beheben.

Der vorliegenden Erfindung liegt daher die Aufgabe zugrunde, eine programmgesteuerte Einheit zu finden, bei welcher sich auftretende Fehler mit geringem Aufwand lokalisieren und beheben lassen, und welche nicht oder nur geringfügig teurer ist als die Massenproduktions-Version einer herkömmlichen programmgesteuerten Einheit.

Diese Aufgabe wird erfindungsgemäß durch die in Patentanspruch 1 beanspruchte programmgesteuerte Einheit gelöst.

Die erfindungsgemäße programmgesteuerte Einheit zeichnet sich dadurch aus, daß sie eine Auswahlvorrichtung enthält, durch welche festlegbar ist, ob die programmgesteuerte Einheit unter Verwendung einer ersten Emulations-Einheit oder unter Verwendung einer zweiten Emulations-Einheit emuliert werden soll.

Durch diese Auswahlvorrichtung ist es möglich, in der Massenproduktions-Version der programmgesteuerten Einheit eine erste Emulations-Einheit vorzusehen, und in der Emulations-Version der programmgesteuerten Einheit eine weitere (zweite) Emulations-Einheit vorzusehen, und die die Emulation steuernde Steuereinheit auswählen zu lassen, unter Verwendung welcher Emulations-Einheit eine Emulation der programmgesteuerten Einheit erfolgen soll.

Dadurch kann auch die Massenproduktions- Version der programmgesteuerten Einheit emuliert werden.

Da es von der programmgesteuerten Einheit nach wie vor eine voll emulierbare Version gibt, besteht keine Notwendigkeit, daß die in der Massenproduktions-Version vorgesehene erste Emulations-Einheit all das leisten können muß, was eine oder mehrere Emulations-Einheiten der Emulations-Version leisten können müssen. D.h., daß es sich bei der ersten Emulations-Einheit um eine Emulations-Einheit mit beschränkter Funktionalität und/oder beschränkter Leistungsfähigkeit handeln kann. Eine solche Emulations-Einheit verteuert die Massenproduktions-Version der programmgesteuerten Einheit kaum und bietet dennoch die Möglichkeit, die Massenproduktions-Version in gewissem Umfang zu emulieren.

Eine wie beschrieben ausgebildete programmgesteuerte Einheit eröffnet die Möglichkeit, in der Massenproduktions-Version auftretende Fehler durch eine Emulation zu lokalisieren und zu beheben, wobei die Massenproduktions-Version nicht oder nur unwesentlich teurer ist als die Massenproduktions-Version einer herkömmlichen programmgesteuerten Einheit.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Figuren näher erläutert. Es zeigen
- Figur 1A: eine herkömmliche Massenproduktions-Version einer programmgesteuerten Einheit,
- Figur 1B: eine herkömmliche Emulations-Version einer programmgesteuerten Einheit,
- Figur 2A: eine im folgenden näher beschriebene Massenproduktions-Version einer programmgesteuerten Einheit,
- Figur 2B: eine im folgenden näher beschriebene EmulationsVersion einer programmgesteuerten Einheit,
- Figur 3: den Aufbau einer Emulations-Schnittstelle der in den Figuren 2A und 2B gezeigten programmgesteuerten Einheiten, und
- Figur 4: einen Sicherungsmechanismus, durch welchen verhinderbar ist, daß über die Emulations-Einheiten der in den Figuren 2A und 2B gezeigten programmgesteuerten Einheiten unberechtigt Daten aus der programmgesteuerten Einheit ausgelesen werden.

Die im folgenden beschriebene programmgesteuerte Einheit zeichnet sich dadurch aus, daß sie eine Auswahlvorrichtung enthält, durch welche festlegbar ist, ob die programmgesteuerte Einheit unter Verwendung einer ersten Emulations-Einheit oder unter Verwendung einer zweiten Emulations-Einheit emuliert werden soll.

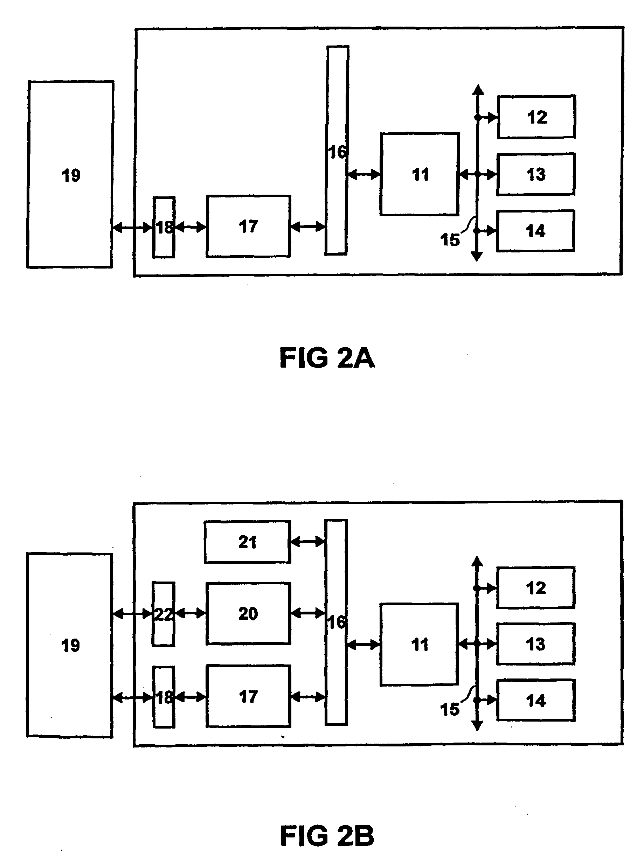

Die Massenproduktions-Version einer solchen programmgesteuerten Einheit ist in Figur 2A, und die Emulations-Version einer solchen programmgesteuerten Einheit ist in Figur 2B gezeigt.

Die in der Figur 2B gezeigte Massenproduktions-Version der programmgesteuerten Einheit enthält wie die in Figur 1A gezeigte herkömmliche Massenproduktions-Version einen Core 11, Peripherie-Einheiten 12, 13 und 14, und einen den Core 11 und die Peripherie-Einheiten 12, 13 und 14 verbindenden Bus 15, und darüber hinaus eine (erste) Emulations-Einheit 17, ein vom Core 11 getrenntes Emulations-Interface 16 zur Verbindung der ersten Emulations-Einheit 17 mit dem Core 11, und eine (erste) Steuerungs-Schnittstelle 18 zur Verbindung der ersten Emulations-Einheit 17 mit einer außerhalb der programmgesteuerten Einheit vorgesehenen, die Emulation steuernden Steuereinheit 19, wobei der Core 11, die Peripherie-Einheiten 12, 13 und 14, und der Bus 15 dem Core 1, den Peripherie-Einheiten 2, 3 und 4, und dem Bus 5 der in der Figur 1A gezeigten Anordnung entsprechen.

Die in der Figur 2B gezeigte Emulations-Version der programmgesteuerten Einheit enthält die in Figur 2A gezeigten und unter Bezugnahme darauf beschriebenen Komponenten der Massenproduktions-Version der programmgesteuerten Einheit, und zusätzlich eine zweite Emulations-Einheit 20, Debug Ressourcen 21, und eine zweite Steuerungs-Schnittstelle 22 zur Verbindung der zweiten Emulations-Einheit 20 mit der die Emulation steuernden Steuereinheit 19, wobei die zweite Emulations-Einheit 20 und die Debug-Ressourcen 21 über die selbe Schnittstelle wie die erste Emulations-Einheit 17, nämlich über das Emulations-Interface 16 mit dem Core 11 verbunden sind. Die Debug Ressourcen 21 entsprechen den Debug-Ressourcen 8 der Emulations-Version gemäß Figur 1B. Die zweite Emulations-Einheit 20 kann der Emulations-Einheit 7 der Emulations-Version gemäß Figur 1B entsprechen, umfaßt aber, wie im folgenden noch näher erläutert wird, vorzugsweise nur einen Teil der Emulations-Einheit 7, genauer gesagt nur diejenigen Komponenten, die nicht schon in der ersten Emulations-Einheit 17 enthalten sind.

Das Emulations-Interface 16 enthält die eingangs bereits erwähnte Auswahlvorrichtung, durch welche festlegbar ist, ob die programmgesteuerte Einheit unter Verwendung einer ersten Emulations-Einheit oder unter Verwendung einer zweiten Emulations-Einheit emuliert werden soll; die erste Emulations-Einheit ist dabei die erste Emulations-Einheit 17, und die zweite Emulations-Einheit ist dabei die zweite Emulations-Einheit 20.

Es sei bereits an dieser Stelle darauf hingewiesen, daß die Auswahlvorrichtung nicht Bestandteil des Emulations-Interface 16 sein muß; sie kann auch in einer anderen Komponente der programmgesteuerten Einheit enthalten sein oder als eigene Komponente der programmgesteuerten Einheit realisiert sein.

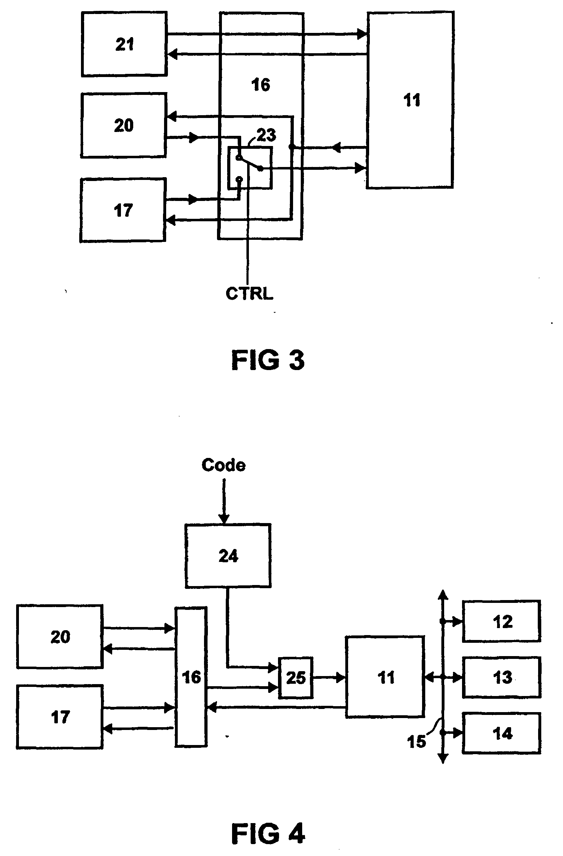

Ein möglicher Aufbau des Emulations-Interface 16 und der darin enthaltenen Auswahlvorrichtung sind in Figur 3 veranschaulicht.

Die Auswahlvorrichtung ist in der Figur 3 mit dem Bezugszeichen 23 bezeichnet. Es handelt sich im betrachteten Beispiel um einen Umschalter, der (beispielsweise über einen Ein- und/oder Ausgabeanschluß (Pin oder Pfad) der programmgesteuerten Einheit oder auf sonstigem Wege) von der Dteuereinheit 19 gesteuert wird.

Durch die Auswahlvorrichtung 23 wird entschieden, ob eine von der ersten Emulations-Einheit 17 ausgegebene Anforderung oder eine von der zweiten Emulations-Einheit 20 ausgegebene Anforderung an den Core 11 weitergeleitet wird. Die vom Core 11 auf eine Anforderung seitens der ersten Emulations-Einheit 17 hin oder auf eine Anforderung seitens der zweiten Emulations-Einheit 20 hin zurückgegeben Daten werden sowohl der ersten Emulations-Einheit 17 als auch der zweiten Emulations-Einheit 20 zugeführt.

Die erste Emulations-Einheit 17 und die zweite Emulations-Einheit 20 weisen, wie vorstehend bereits erwähnt wurde, vorzugsweise zusammen den selben Funktionsumfang auf wie die Emulations-Einheit 7 der herkömmlichen Emulations-Version der programmgesteuerten Schaltung gemäß Figur 1B. Daraus wird deutlich, daß die erste Emulations-Einheit 17 einen geringeren Funktionsumfang aufweist als die Emulations-Einheit 7 der Emulations-Version der programmgesteuerten Einheit gemäß Figur 1B. Dies, und ferner der Umstand, daß die Massenproduktions- Version der programmgesteuerten Einheit keine Debug-Ressourcen enthält, eröffnet die Möglichkeit, eine Massenproduktions-Version einer programmgesteuerten Einheit zu schaffen, die emulierbar ist, aber nur unwesentlich mehr kostet als eine nicht emulierbare Massenproduktions-Version.

Eine weitere Besonderheit der betrachteten programmgesteuerten Einheit besteht darin, daß diese einen Sicherungsmechanismus aufweist, durch welchen verhindert wird, daß unberechtigte Personen durch Anschluß einer Steuereinheit 19 an die programmgesteuerte Einheit geheime Daten oder Programme aus einer internen Speichereinrichtung der programmgesteuerten Einheit auslesen können.

Der Aufbau einer einen solchen Sicherungsmechanismus aufweisenden Emulations-Version einer programmgesteuerten Einheit ist in Figur 4 veranschaulicht.

Die in der Figur 4 gezeigte Emulations-Version basiert auf der in der Figur 2B gezeigten Emulations-Version; mit den selben Bezugszeichen bezeichnete Komponenten bezeichnen gleiche oder einander entsprechende Komponenten. Die in der Figur 4 gezeigte Emulations-Version weist gegenüber dem in der Figur 2B gezeigten Emulations-Version zusätzlich einen Sicherungsmechanismus 24 und ein im betrachteten Beispiel durch ein UND-Gatter 25 gebildetes Sperrglied auf.

Das UND-Gatter 25 ist zwischen dem Emulations-Interface 16 und dem Core 11 vorgesehen, genauer gesagt in dem Signalpfad, über welchen von den Emulations-Einheiten 17 und 20 stammende Anforderungen an den Core 11 weitergeleitet werden. Es weist zwei Eingangsanschlüsse auf, von welchen einem die vom Emulations-Interface 16 ausgegebenen Daten zugeführt werden, und von welchen dem anderen ein Enable-Signal des Sicherungsmechanismus 24 zugeführt wird.

Das UND-Gatter 25 läßt die vom Emulations-Interface 16 zum Core 11 weitergeleiteten Anforderungsdaten passieren, wenn und so lange das Enable-Signal des Sicherungsmechanismus 24 den Wert 1 hat, und sperrt die Übertragung der Anforderungsdaten zum Core 11, wenn das Enable-Signal den Wert 0 hat.

Dem Sicherungsmechanismus 24 muß ein bestimmter Code zugeführt werden, damit das von ihm erzeugte Enable-Signal den Wert 1 annimmt. Wird nicht der richtige Code zugeführt, weist das Enable-Signal den Wert 0 auf, und die programmgesteuerte Einheit kann auch dann, wenn es sich um eine Emulations- Version handelt, nicht emuliert und damit auch nicht ausspioniert werden. Der bestimmte Code ist im betrachteten Beispiel fest in der programmgesteuerten Einheit eingestellt und wird nur ganz bestimmten Personen, insbesondere den für Beseitigung von Fehlern zuständigen Kundenbetreuern bekanntgegeben.

Für die Eingabe des Codes existieren verschiedene Möglichkeiten. Die Eingabe kann über bestimmte Ein- und/oder Ausgabeanschlüsse der programmgesteuerten Einheit oder über die Steuereinheit 19 erfolgen.

### Bezugszeichenliste

- 1: Core
- 2: Peripherie-Einheit
- 3: Peripherie-Einheit
- 4: Peripherie-Einheit
- 5: Bus
- 6: Emulations-Interface
- 7: Emulations-Einheit
- 8: Debug-Ressourcen
- 9: Steuerungs-Schnittstelle
- 10: Emulator
- 11: Core
- 12: Peripherie-Einheit
- 13: Peripherie-Einheit
- 14: Peripherie-Einheit
- 15: Bus
- 16: Emulations-Interface
- 17: erste Emulations-Einheit
- 18: erste Steuerungs-Schnittstelle
- 19: Steuereinheit
- 20: zweite Emulations-Einheit
- 21: Debug-Ressourcen
- 22: zweite Steuerungs-Schnittstelle
- 23: Auswahlvorrichtung
- 24: Sicherungsmechanismus
- 25: UND-Gatter

## Patentansprüche

1. Programmgesteuerte Einheit,
- wobei die programmgesteuerte Einheit eine erste Emulations-Einheit (17) enthält, und
- wobei die programmgesteuerte Einheit eine Auswahlvorrichtung (23) enthält, durch welche im Fall, daß die programmgesteuerte Einheit zusätzlich eine zweite Emulations-Einheit (20) enthält, festlegbar ist, ob die programmgesteuerte Einheit unter Verwendung der ersten Emulations-Einheit (17) oder unter Verwendung der zweiten Emulations-Einheit (20) emuliert werden soll,
- wobei die Emulations-Einheiten (17, 20) dazu ausgelegt sind, das Auftreten vorgebbarer Zustände oder Ereignisse zu erkennen und auf eine ebenfalls vorgebbare Art und Weise auf das Auftreten des betreffenden Zustandes oder Ereignisses zu reagieren,
- wobei die erste Emulations-Einheit (17) eine Emulations-Einheit mit beschränkter Funktionalität und/oder beschränkter Leistungsfähigkeit ist,
- wobei die zweite Emulations-Einheit (20) Komponenten enthält, die nicht schon in der ersten Emulations-Einheit (17) enthalten sind, und
- wobei die Auswahlvorrichtung (23) eine Umschaltvorrichtung ist, durch welche wahlweise aus der ersten Emulations-Einheit (17) oder aus der zweiten Emulations-Einheit (20) zu einem Core (11) der programmgesteuerten Einheit ausgegebene Daten oder Signale an den Core weitergeleitet werden.

2. Programmgesteuerte Einheit nach Anspruch 1, **dadurch gekennzeichnet,**
**daß** die Umschaltvorrichtung (23) von einer außerhalb der programmgesteuerten Einheit vorgesehenen Steuereinheit (19) gesteuert wird.

3. Programmgesteuerte Einheit nach einem der vorhergehenden Ansprüche,
**dadurch gekennzeichnet,**
**daß** eine Massenproduktions-Version der programmgesteuerten Einheit nur die erste Emulations-Einheit (17) enthält.

4. Programmgesteuerte Einheit nach Anspruch 1 oder 2,
**dadurch gekennzeichnet,**
**daß** eine Emulations-Version der programmgesteuerten Einheit zusätzlich die zweite Emulations-Einheit (20) enthält.

5. Programmgesteuerte Einheit nach Anspruch 4,
**dadurch gekennzeichnet,**
**daß** die Emulations-Version der programmgesteuerten Einheit zusätzlich Debug-Ressourcen (21) enthält.

6. Programmgesteuerte Einheit nach Anspruch 5,
**dadurch gekennzeichnet,**
**daß** die Debug-Ressourcen (21) einen Monitor-Speicher enthalten.

7. Programmgesteuerte Einheit nach Anspruch 5 oder 6,
**dadurch gekennzeichnet,**
**daß** die Debug-Ressourcen (21) einen Overlay-Speicher enthalten.

8. Programmgesteuerte Einheit nach einem der vorhergehenden Ansprüche,
**dadurch gekennzeichnet,**
**daß** die Emulations-Einheiten (17, 20) über eine gemeinsam genutzte Schnittstelle (16) mit dem Core (11) der programmgesteuerten Einheit verbunden sind.

9. Programmgesteuerte Einheit nach Anspruch 8,
**dadurch gekennzeichnet,**
**daß** die Umschaltvorrichtung (23) Bestandteil der gemeinsamen Schnittstelle (16) ist.

10. Programmgesteuerte Einheit nach Anspruch 1,
**dadurch gekennzeichnet,**
**daß** die Emulations-Einheiten (17, 20) jeweils über eine eigene Schnittstelle (18, 22) mit einer außerhalb der programmgesteuerten Einheit vorgesehenen Steuereinheit (19) verbunden sind.

11. Programmgesteuerte Einheit nach einem der vorhergehenden Ansprüche,
**dadurch gekennzeichnet,**
**daß** die programmgesteuerte Einheit einen Sicherungsmechanismus (24) verfügt, durch welchen die Verbindung zwischen den Emulations-Einheiten (17, 20) und dem Core (11) der programmgesteuerten Einheit unterbrechbar ist.

12. Programmgesteuerte Einheit nach Anspruch 11,
**dadurch gekennzeichnet,**
**daß** die Verbindung zwischen den Emulations-Einheiten (17, 20) und dem Core (11) der programmgesteuerten Einheit nur freigegeben wird, wenn dem Sicherungsmechanismus (24) vorher ein bestimmter Code zugeführt wurde.

13. Programmgesteuerte Einheit nach Anspruch 11 oder 12,
**dadurch gekennzeichnet,**
**daß** das Sperren und Freigeben der Verbindung zwischen den Emulations-Einheiten (17, 20) und dem Core (11) der programmgesteuerten Einheit unter Verwendung eines UND-Gatters (25) erfolgt, an dessen einen Eingangsanschluß ein Freigabesignal des Sicherungsmechanismus (24) angelegt wird.

## Claims

1. Program-controlled unit,
- wherein the program-controlled unit contains a first emulation unit (17), and
- wherein the program-controlled unit contains a selection apparatus (23) by means of which, in the event of the program-controlled unit additionally containing a second emulation unit (20), it is stipulable whether the program-controlled unit is intended to be emulated using the first emulation unit (17) or using the second emulation unit (20),
- wherein the emulation units (17, 20) are designed to identify the occurrence of prescribeable states or events and to react to the occurrence of the relevant state or event in a likewise prescribeable manner,
- wherein the first emulation unit (17) is an emulation unit with limited functionality and/or limited performance,
- wherein the second emulation unit (20) contains components that are not already contained in the first emulation unit (17), and
- wherein the selection apparatus (23) is a changeover apparatus that forwards data or signals to a core (11) of the program-controlled unit, said data or signals being output to the core either from the first emulation unit (17) or from the second emulation unit (20).

2. Program-controlled unit according to Claim 1, **characterized**
**in that** the changeover apparatus (23) is controlled by a control unit (19) provided outside the program-controlled unit.

3. Program-controlled unit according to either of the preceding claims,
**characterized**
**in that** a mass production version of the program-controlled unit contains only the first emulation unit (17).

4. Program-controlled unit according to Claim 1 or 2,
**characterized**
**in that** an emulation version of the program-controlled unit additionally contains the second emulation unit (20).

5. Program-controlled unit according to Claim 4,
**characterized**
**in that** the emulation version of the program-controlled unit additionally contains debug resources (21).

6. Program-controlled unit according to Claim 5,
**characterized**
**in that** the debug resources (21) contain a monitor memory.

7. Program-controlled unit according to Claim 5 or 6,
**characterized**
**in that** the debug resources (21) contain an overlay memory.

8. Program-controlled unit according to one of the preceding claims,
**characterized**
**in that** the emulation units (17, 20) are connected to the core (11) of the program-controlled unit via a jointly used interface (16).

9. Program-controlled unit according to Claim 8,
**characterized**
**in that** the changeover apparatus (23) is part of the shared interface (16).

10. Program-controlled unit according to Claim 1,
**characterized**
**in that** the emulation units (17, 20) are each connected via a dedicated interface (18, 22) to a control unit (19) provided outside the program-controlled unit.

11. Program-controlled unit according to one of the preceding claims,
**characterized**
**in that** the program-controlled unit has a safety mechanism (24) by means of which the connection between the emulation units (17, 20) and the core (11) of the program-controlled unit is interruptable.

12. Program-controlled unit according to Claim 11,
**characterized**
**in that** the connection between the emulation units (17, 20) and the core (11) of the program-controlled unit is enabled only if a particular code has been supplied to the safety mechanism (24) beforehand.

13. Program-controlled unit according to Claim 11 or 12,
**characterized**
**in that** the connection between the emulation units (17, 20) and the core (11) of the program-controlled unit is disabled and enabled using an AND gate (25), one input connection of which has an enable signal from the safety mechanism (24) applied to it.

## Revendications

1. Unité commandée par programme,
- dans laquelle l'unité commandée par programme contient une première unité d'émulation (17), et
- dans laquelle l'unité commandée par programme contient un sélecteur (23) permettant de déterminer, dans le cas où l'unité commandée par programme contient en outre une deuxième unité d'émulation (20), si l'unité commandée par programme doit être émulée à l'aide de la première unité d'émulation (17) ou à l'aide de la deuxième unité d'émulation (20),
- dans laquelle les unités d'émulation (17, 20) sont conçues pour détecter l'apparition d'états ou d'évènements prédéfinissables et pour réagir d'une manière également prédéfinissable face à l'apparition de l'état ou évènement concerné,
- dans laquelle la première unité d'émulation (17) est une unité d'émulation présentant une fonctionnalité limitée et/ou une efficacité limitée,
- dans laquelle la deuxième unité d'émulation (20) contient des composants qui ne sont pas déjà contenus dans la première unité d'émulation (17), et
- dans laquelle le sélecteur (23) est un commutateur permettant de transmettre au coeur des données ou des signaux fournis à un coeur (11) de l'unité commandée par programme à partir de la première unité d'émulation (17) ou à partir de la deuxième unité d'émulation (20).

2. Unité commandée par programme selon la revendication 1,
**caractérisée en ce que**
le commutateur (23) est commandé par une unité de commande (19) prévue à l'extérieur de l'unité commandée par programme.

3. Unité commandée par programme selon l'une des revendications précédentes,
**caractérisée en ce que**
une version de production en masse de l'unité commandée par programme contient uniquement la première unité d'émulation (17).

4. Unité commandée par programme selon la revendication 1 ou 2,
**caractérisée en ce que**
une version d'émulation de l'unité commandée par programme contient en outre la deuxième unité d'émulation (20).

5. Unité commandée par programme selon la revendication 4,
**caractérisée en ce que**
la version d'émulation de l'unité commandée par programme contient en outre des ressources de débogage (21).

6. Unité commandée par programme selon la revendication 5,
**caractérisée en ce que**
les ressources de débogage (21) contiennent une mémoire de moniteur.

7. Unité commandée par programme selon la revendication 5 ou 6,
**caractérisée en ce que**
les ressources de débogage (21) contiennent une mémoire overlay.

8. Unité commandée par programme selon l'une des revendications précédentes,
**caractérisée en ce que**
les unités d'émulation (17, 20) sont reliées au coeur (11) de l'unité commandée par programme par le biais d'une interface commune (16).

9. Unité commandée par programme selon la revendication 8,
**caractérisée en ce que**
le commutateur (23) fait partie de l'interface commune (16).

10. Unité commandée par programme selon la revendication 1,
**caractérisée en ce que**
les unités d'émulation (17, 20) sont reliées à une unité de commande (19) prévue à l'extérieur de l'unité commandée par programme, respectivement par le biais d'une interface propre (18, 22).

11. Unité commandée par programme selon l'une des revendications précédentes,
**caractérisée en ce que**
l'unité commandée par programme dispose d'un mécanisme de sécurité (24) permettant d'interrompre la liaison entre les unités d'émulation (17, 20) et le coeur (11) de l'unité commandée par programme.

12. Unité commandée par programme selon la revendication 11,
**caractérisée en ce que**
la liaison entre les unités d'émulation (17, 20) et le coeur (11) de l'unité commandée par programme n'est libérée que lorsque le mécanisme de sécurité (24) a préalablement reçu un certain code.

13. Unité commandée par programme selon la revendication 11 ou 12,
**caractérisée en ce que**
le blocage et la libération de la liaison entre les unités d'émulation (17, 20) et le coeur (11) de l'unité commandée par programme sont réalisés à l'aide d'une porte ET (25), à la borne d'entrée de laquelle est appliqué un signal de libération du mécanisme de sécurité (24).
